Europäisches Patentamt
European Patent Office
Office européen des brevets

(11) Veröffentlichungsnummer: **0 463 371 A2**

(12) # EUROPÄISCHE PATENTANMELDUNG

(21) Anmeldenummer: **91108438.2**

(22) Anmeldetag: **24.05.91**

(51) Int. Cl.5: **F16F 7/12**, B60R 19/34

(30) Priorität: **25.06.90 AT 1349/90**

(43) Veröffentlichungstag der Anmeldung:
**02.01.92 Patentblatt 92/01**

(84) Benannte Vertragsstaaten:
**AT BE CH DE ES FR GB IT LI LU NL SE**

(71) Anmelder: **Austria Metall Aktiengesellschaft**
**A-5282 Braunau am Inn(AT)**

(72) Erfinder: **Garnweidner, Peter**
**A-5112 Lamprechtshausen 429 a(AT)**

(74) Vertreter: **WILHELMS, KILIAN & PARTNER**
**Patentanwälte**
**Eduard-Schmid-Strasse 2**
**W-8000 München 90(DE)**

(54) **Stossverzehrkörper, insbesondere für Kraftfahrzeuge.**

(57) Stoßverzehrkörper, insbesondere für Kraftfahrzeuge, der aus einem etwa zylindrischen, in Längserstreckung des Stoßverzehrkörpers liegenden Grundkörpers besteht, der einen Bereich mit etwa radial umlaufenden Rippen aufweist, wobei dieser Bereich an einem Ende durch das Stoßstangenlager und am anderen Ende durch einen den Grundkörper umfassenden Flansch oder eine Konsole begrenzt ist und der Übergangsbereich zwischen dem Flansch oder der Konsole und dem Grundkörper an der dem Stoßstangenlager abgewandten Seite eine umlaufende Nut oder Kerbe aufweist.

Fig.1
3
11
11
1
2
2'
13
8
12
5
4
12
7
9
6

EP 0 463 371 A2

Die Erfindung bezieht sich auf einen Stoßverzehrkörper, insbesondere für Kraftfahrzeuge. Um die Gefahren bei Beschädigungen von Kraftfahrzeugen für die darin sitzenden Personen gering zu halten, ist es bei den heutigen Fahrzeugen üblich, daß Stoßverzehrelemente zwischen Stoßstangen und Trägersystem angeordnet sind. Während eines Unfalls muß das Fahrzeug über seine gesamte Kollisionsfolge die Geschwindigkeit vermindern, um die Belastungen der in ihm befindlichen Personen möglichst gering zu halten. Daher ist es notwendig, die Festigkeitsreserven der Wagenstruktur von Beginn der Kollision an voll auszunützen. Das bedeutet, daß der Verformungswiderstand von Beginn der Kollision an möglichst hoch ist, um eine bestmögliche Verformungsarbeit verrichten zu können. Somit muß eine möglichst konstante Kraft über den Verlauf gegeben sein. Es sind diverse Halterungen von Stoßstangen bekannt, in denen die Umformarbeit eines Teiles verwendet wird, um diese konstante Kraft zu erzeugen. Ähnliche Systeme werden auch in den Lenksäulen der Kraftfahrzeuge verwendet. Nachteilig an diesen Bauteilen ist, daß sie aus mehreren Teilen bestehen und daher für sie ein Zusammenbau nötig ist.

Es ist daher wünschenswert, einen einstückigen Bauteil herzustellen, der ebenfalls einen möglichst konstanten Verformungswiderstand hat.

Dies wird erfindungsgemäß in der Weise erreicht, daß der Bauteil aus einem etwa zylindrischen, in Längserstreckung des Stoßverzehrkörpers liegenden Grundkörper besteht, der einen Bereich mit etwa radial umlaufenden Rippen aufweist, wobei dieser Bereich an einem Ende durch das Stoßstangenlager und am anderen Ende durch einen den Grundkörper im Umfang umfassenden Flansch oder eine Konsole begrenzt ist und der Übergangsbereich zwischen dem Flansch oder der Konsole und dem Grundkörper eine umlaufende Nut oder Kerbe an der dem Stoßstangenlager abgewandten Seite aufweist.

Dieser Baukörper ist einfach zwischen Stoßstange und Wagenträger zu montieren. Der Stoßverzehrkörper funktioniert auf die Weise, daß bei Überschreiten der Auslegelast der mit einer Nut versehene Flansch im Übergangsbereich zum Grundkörper bricht und die am nächsten befindliche Rippe gegen den Flansch gedrückt wird und ebenfalls abschert. Dieser Vorgang wiederholt sich mit jeder weiteren darüber befindlichen Rippe.

Dieser Stoßverzehrkörper beseitigt die Nachteile der heute verwendeten und ist leicht montierbar. Da er einstükkig ist, ist er kostengünstig. Bei kleinen Kollisionen braucht er lediglich ausgetauscht werden, wodurch der Reparaturaufwand gering ist. In weiterer Ausgestaltung der Erfindung ist es besonders günstig, daß der Grundkörper in seiner Längserstreckung über den Flansch oder die Konsole mit der umlaufenden Nut oder Kerbe übersteht.

Der Grundkörper wird dadurch bei Montage in einem Längsträger des Fahrzeuges zusätzlich geführt, wodurch ein ungewolltes Auskippen bei exzentrischer Belastung vermieden wird.

Es ist dabei erfindungsgemäß weiters günstig, daß der mit der Nut oder Kerbe versehene Flansch oder die Konsole einen ringförmigen Ansatz aufweist, der sich um den überstehenden Teil des Grundkörpers erstreckt.

Durch den ringförmigen Ansatz wird der überstehende Teil geführt und es wird vermieden, daß beim Auskippen unter exzentrischer Last der Hohlraum des Längsträgers, an dem der Stoßverzehrkörper montiert ist, beschädigt wird.

Weiters kann ein solcher Stoßverzehrkörper auch an Querträgern angeordnet werden oder außerhalb der Längsträger. Um den Verformungswiderstand möglichst konstant über den gesamten Verformungsweg zu halten, ist es vorteilhaft, daß die am Grundkörper angeordneten Rippen in einem spitzen Winkel zur Ebene normal zur Längserstreckung des Stoßverzehrkörpers verlaufen.

Somit sind immer mehrere Rippen an der Verformung beteiligt, wodurch es zu keiner stoßförmigen Belastung im Übergang beim Abscheren zwischen den Rippen kommen kann, wie es bei einer Anordnung mit Rippen normal zur Längserstrekkung der Fall ist. Durch Anordnung jeweils einer Rippe über den halben Umfang des Außenmantels des Grundkörpers und Gegeneinanderneigen der Rippen an den jeweils beiden Außenmantelumfanghälften kann die Verformungskraft noch gleichmäßiger gestaltet werden. Um das Wegfliegen von abbrechenden Rippen im Kollisionsfall zu vermeiden, ist es vorteilhaft, den Grundkörper im Bereich der Rippen zu umhüllen. Diese Umhüllung kann sowohl eine Schrumpffolie als auch eine Kunststoffmasse, die zwischen den beiden Flanschen umgossen ist, sein.

Die Erfindung wird anhand der nachstehenden Zeichnungen beschrieben. Es zeigen:

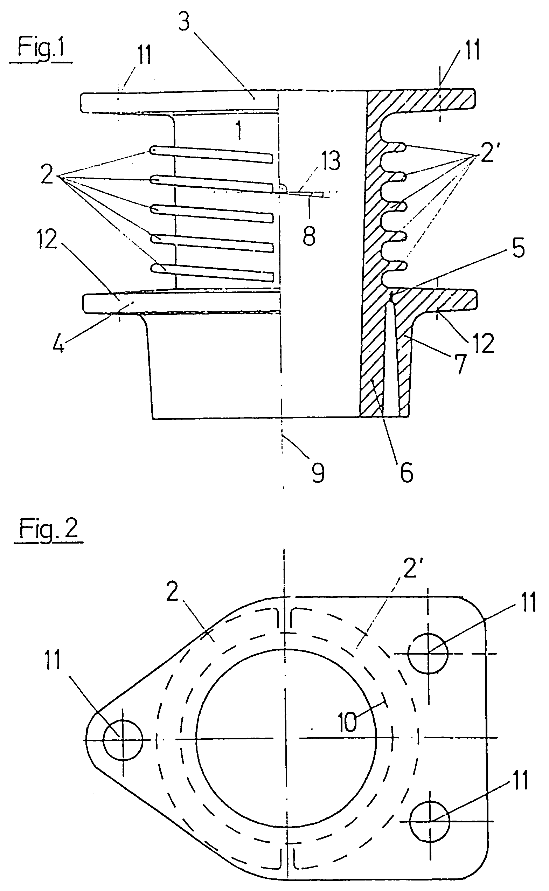

- Fig. 1 einen Stoßverzehrkörper, wobei der rechte Teil längs I-I in Fig. 2 geschnitten ist.
- Fig. 2 den Stoßverzehrkörper von Fig. 1 in Ansicht von oben.

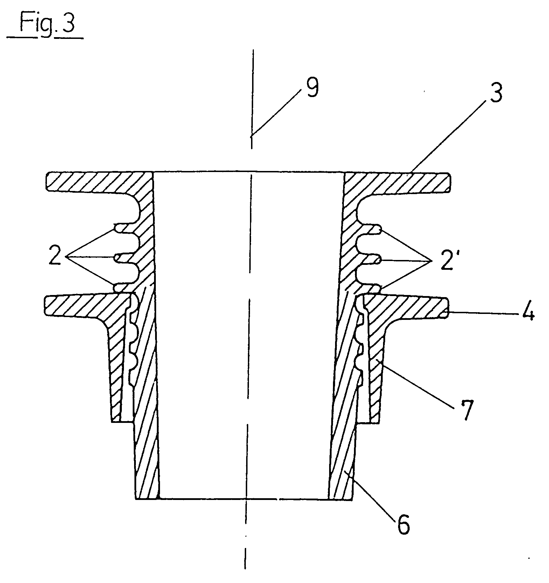

- Fig. 3 den Stoßverzehrkörper in axialem Schnitt während eines Kollisionsvorganges.

Der Grundkörper 1 weist einen Bereich mit radial umlaufenden Rippen 2, 2' auf. Dieser Bereich ist an einem Ende durch das Stoßstangenlager 3 und am anderen Ende durch den Flansch 4 begrenzt. Der Flansch 4 weist auf der dem Stoßstangenlager 3 abgewandten Seite eine umlaufende Nut 5 im Übergangsbereich zum Grundkörper 1 auf. Im Kollisionsfall leitet die Nut 5 einen Riß ein, da sie im zugbelasteten Teil des Flansches 4 liegt. Der Grundkörper 1 weist in seiner Längserstreckung 9 einen überstehenden Teil 6 auf, der eine Führung entlang des am Flansch 4 angeordneten ringförmigen Ansatzes 7 gewährleistet. Die Rippen 2, 2' stehen im spitzen Winkel 8 zu einer normal zur Längserstreckung 9 stehenden, gedachten Ebene 13. Die Rippen 2, 2' umlaufen jeweils nur eine Hälfte des Außenmantels 10 und sind jeweils zueinander geneigt. Dadurch kommt es zu einer gleichmäßig großen Verformungskraft während des Kollisionsvorganges, da immer mehrere Rippen gleichzeitig an der Verformung beteiligt sind.

Im ausgeführten Beispiel sind am Flansch 4 und am Stoßstangenlager 3 Bohrungen 11, 12 normal zur Längserstreckung 9 angeordnet. Diese Bohrungen können jedoch je nach Bauform der Stoßstange oder bei Verwendung einer Konsole statt des Flansches 4 in jedem beliebigen Winkel zur Längserstreckung 9 stehen.

**Patentansprüche**

**1.** Stoßverzehrkörper, insbesondere für Kraftfahrzeuge, dadurch gekennzeichnet, daß er aus einem etwa zylindrischen, in Längserstreckung des Stoßverzehrkörpers liegenden Grundkörper (1) besteht, der einen Bereich mit etwa radial umlaufenden Rippen (2, 2') aufweist, wobei dieser Bereich an einem Ende durch das Stoßstangenlager (3) und am anderen Ende durch einen den Grundkörper (1) im Umfang umfassenden Flansch (4) oder eine Konsole begrenzt ist, und der Übergangsbereich zwischen dem Flansch (4) oder der Konsole und dem Grundkörper (1) an der dem Stoßstangenlager (3) abgewandten Seite eine umlaufende Nut oder Kerbe (5) aufweist.

**2.** Stoßverzehrkörper nach Anspruch 1, dadurch gekennzeichnet, daß der Grundkörper (1) in seiner Längserstreckung (9) über den Flansch (4) oder die Konsole mit der umlaufenden Nut oder Kerbe (5) übersteht.

**3.** Stoßverzehrkörper nach Anspruch 1 oder 2, dadurch gekennzeichnet, daß der mit der Nut oder Kerbe (5) versehene Flansch (4) oder die Konsole einen ringförmigen Ansatz (7) aufweist, der sich um den überstehenden Teil (6) des Grundkörpers (1) erstreckt.

**4.** Stoßverzehrkörper nach Anspruch 1 bis 3, dadurch gekennzeichnet, daß die am Grundkörper (1) angeordneten Rippen (2) in einem spitzen Winkel (8) zur Ebene (13) normal zur Längserstreckung des Stoßverzehrkörpers verlaufen.

**5.** Stoßverzehrkörper nach Anspruch 1 bis 4, dadurch gekennzeichnet, daß jeweils eine Rippe (2, 2') über den halben Umfang des Außenmantels (10) des Grundkörpers (1) verläuft und die Rippen (2) der beiden Außenmantelhälften zueinander geneigt sind.

**6.** Stoßverzehrkörper nach Anspruch 1 bis 5, dadurch gekennzeichnet, daß der mit Rippen (2) versehene Bereich des Grundkörpers (1) eine Umhüllung aufweist.

**7.** Stoßverzehrkörper nach Anspruch 1 bis 6, dadurch gekennzeichnet, daß er aus einer gegossenen Leichtmetallegierung, insbesondere Aluminiumlegierung, besteht.

Fig.1
3
11
11
1
2'
13
2
8
12
5
4
12
7
9
6

Fig. 2
2'
2
11
11
10
11

Fig. 3
9
3
2
2'
4
7
6